Europäisches Patentamt

(19) European Patent Office

Office européen des brevets

(11) Numéro de publication : **0 458 672 A1**

# (12) DEMANDE DE BREVET EUROPEEN

(21) Numéro de dépôt : **91401219.0**

(22) Date de dépôt : **07.05.91**

(51) Int. Cl.⁵ : **G01N 21/03**, G01N 23/20

(30) Priorité : 10.05.90 FR 9005814

(43) Date de publication de la demande :
    27.11.91 Bulletin 91/48

(84) Etats contractants désignés :
    DE GB IT.

(71) Demandeur : **COMMISSARIAT A L'ENERGIE
ATOMIQUE**
31-33, rue de la Fédération
F-75015 Paris (FR)

(72) Inventeur : **Dahan, Noel**
33 Avenue de Savigny
F-93600 Aulnay sous Bois (FR)

Inventeur : **Couty, René**
10 rue Danièle Casanova
F-94170 Le Perreux (FR)
Inventeur : **Berthault, André**
23, Avenue Aristide Briand
F-91290 Arpajon (FR)
Inventeur : **Lefevre, Alain**
Place de la Mairie
F-77100 Nanteuil les Meaux (FR)
Inventeur : **Boutroux, Jack**
23 rue Saufflet
F-91290 Arpajon (FR)
Inventeur : **Pere, Jacques**
32 rue de Richarville
F-91410 Les Granges le Roi (FR)

(74) Mandataire : **Mongrédien, André et al**
c/o BREVATOME 25, rue de Ponthieu
F-75008 Paris (FR)

(54) **Cellule à enclumes de diamant et son dispositif d'observation et d'analyse d'échantillons à très hautes pressions.**

(57)    L'invention permet d'effectuer des observations de matériaux sous des pressions extrêmement élevées.

La chambre haute pression de la cellule est formée par un joint métallique (22) et par deux diamants (24). Chacun de ces derniers est monté sur un support (26), lui-même monté sur un système à rotules (27, 28). Chaque montage supérieur et inférieur est réglable au moyen de vis (32) traversant les montages. La pression est maintenue à l'intérieur de la chambre haute pression grâce à un écrou périphérique (40).

La cellule peut être avantageusement utilisée avec un conteneur de conditionnement et une presse hydraulique permettant chacun l'observation de la chambre pression.

FIG. 3

## DOMAINE DE L'INVENTION

L'invention concerne l'observation et l'analyse d'échantillons de matières confinées dans une chambre à très hautes pressions. L'invention se rapporte, en particulier, à la cellule qui utilise deux enclumes de diamant pour communiquer les très hautes pressions à la chambre dans laquelle sont placés les échantillons à observer.

L'invention trouve son application dans la recherche physique et l'étude des matériaux mettant en jeu des pressions considérables.

En effet, la cellule selon l'invention permet aussi bien l'étude du milieu transmetteur ou de confinement (gaz ou autres fluides ou solides), l'étude des matériaux confinés, tels que les cristaux, les polycristaux (isolants, semi-conducteurs, supra-conducteurs ou conducteurs), les géo-matériaux et, enfin, les matériaux métalliques. Elle est devenue l'outil indispensable que réclament les recherches des astro-physiciens, des physiciens des solides, des géo-physiciens, des cristallographes, des métallurgistes, des thermodynamiciens, des mécaniciens, des biologistes et des chimistes.

## ART ANTERIEUR

Pour l'étude de la structure et du comportement de certains matériaux en vue de leur utilisation, il est nécessaire d'observer ceux-ci sous la forme d'échantillons soumis à des pressions très élevées. Des pressions de l'ordre de $15.10^9$ Pa ont été atteintes au moyen d'appareils pesant plusieurs tonnes. Cet ordre de grandeur a été limité par la résistance des matériaux constituant l'enceinte ou la chambre à haute pression. Ce genre d'installation a été remplacé depuis par des cellules à enclumes de diamant constituant des instruments extrêmement simples dans leur principe, mais dont la réalisation est, en revanche, très délicate.

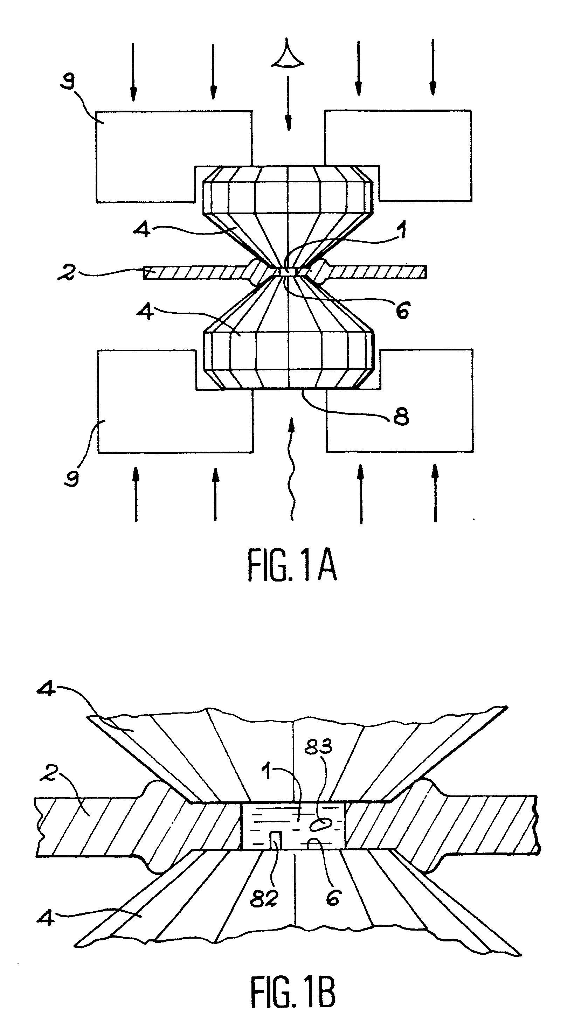

En référence à la figure 1A, le principe d'un tel dispositif est très délicat. L'échantillon à observer est placé dans un orifice 1 pratiqué au milieu d'un joint plat 2, intercalé entre les pointes de deux diamants naturels 4 pressés l'un contre l'autre. Sur les faces 8 opposées aux pointes 6 des diamants 4, sont appliquées, à l'aide de supports 9, deux fortes pressions qui sont démultipliées au niveau des pointes, du fait du rapport de la surface d'une pointe 6 sur une surface 8 recevant la pression. Les supports 9 doivent être percés en leur centre pour permettre l'observation par le haut et l'éclairage par le bas.

Comme le montre la figure 1B, les pointes 6 des deux diamants 4 et le joint 2 délimitent la chambre localisée dans l'orifice 1 et dans laquelle se trouvent enfermés l'échantillon du matériau à observer 83 et un rubis 82 servant à la mesure de la pression.

Ce type de dispositif permet actuellement d'obtenir des pressions gigantesques, de l'ordre de $5.10^{11}$ Pa, c'est-à-dire 5 000 000 de bars, ceci dans un très petit volume. Les échantillons ont alors une centaine de micromètres de côté et une épaisseur de 2 à 5 micromètres.

De nombreux systèmes expérimentaux permettent d'exercer la force de compression sur les faces externes des diamants, mais tous demandent le même soin dans leur réalisation. Il est en particulier nécessaire que les deux enclumes de diamant soient parfaitement parallèles et alignées l'une par rapport à l'autre.

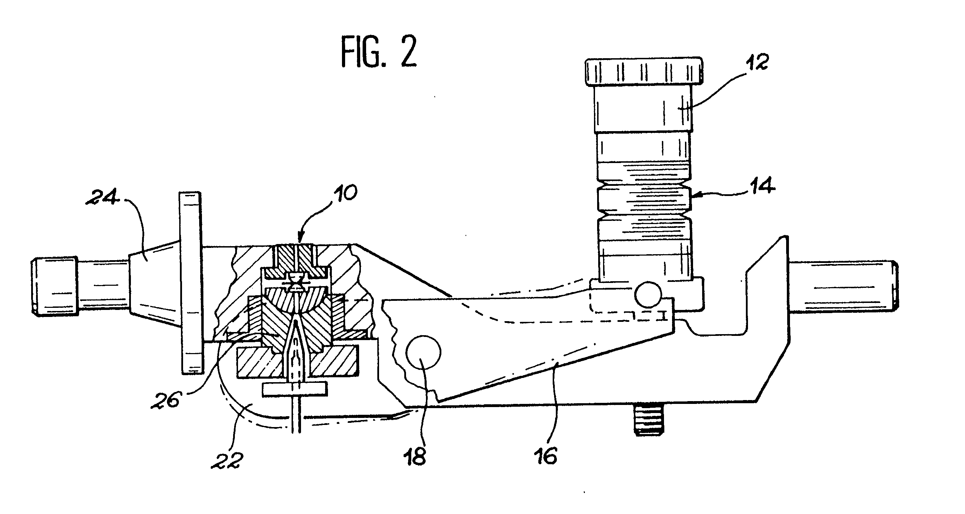

La figure 2 représente une installation destinée à l'observation des matériaux au moyen d'une cellule à enclumes de diamant. Elle comprend principalement une vis de serrage 12 agissant sur un empilage de rondelles BELLEVILLE 14 en appui sur un levier 16 monté tournant autour d'un axe de rotation 18. La cellule à enclumes de diamant 10 est encastrée entre l'extrémité 22 du levier 16 et un support fixe 24. Le principe de ce dispositif est analogue à celui d'un casse-noix. En tournant la tête de la vis de pression 12 dans le sens des aiguilles d'une montre, on engendre une force transmise, par l'intermédiaire des rondelles 14 et du levier 16, à un piston 26 agissant sur la partie inférieure de la cellule 10. La partie supérieure de cette cellule 10 est en appui sur le support 24.

En se reportant au principe décrit avec la figure 1, il est facile d'imaginer l'intensité des pressions pouvant être transmise aux échantillons enfermés dans la chambre haute pression 1 entre les deux enclumes de diamant 4 de la cellule 10.

On comprend également, en regardant le montage de la figure 2, que l'effort de serrage entre les deux diamants se fait selon une direction confondue avec l'axe vertical de la cellule 10.

Par contre, ce serrage est transmis grâce au mouvement de pivotement du levier 16 autour de son axe de rotation 18. Il s'ensuit que les efforts de serrage ne sont pas forcément symétriques par rapport à l'axe vertical de la cellule 10. La qualité du positionnement respectif des deux diamants s'en ressent et des efforts de cisaillement transversaux apparaissent dans la cellule et au niveau des diamants. Le réglage du positionnement de ces deux diamants est donc ici, et dans la plupart des cas, un problème primordial à régler.

Le but de l'invention est de résoudre ce problème en présentant une cellule à enclumes de diamant de structure différente.

## RESUME DE L'INVENTION

A cet effet, un premier objet principal de l'invention est une cellule d'observation et d'analyse thermodynamique d'un échantillon de matière sous haute pression du type à enclumes de diamant, à axe longitudinal et comprenant :

    – un joint métallique, fin et percé en son centre pour former les parois latérales d'une chambre à haute pression ;

    – deux enclumes de diamant, appelées "diamants", placées face à face par une face interne de chaque côté du joint pour fermer hermétiquement la chambre à haute pression ;

    – des moyens de positionnement des deux diamants l'un par rapport à l'autre ; et

    – des moyens de transmission de l'effort de serrage des deux diamants l'un vers l'autre, pour faire régner une pression très élevée dans la chambre à haute pression.

Selon l'invention, les moyens de transmission de l'effort de serrage comprennent pour chaque diamant un ensemble constitué de :

    – une rotule percée selon l'axe longitudinal et placée en appui sur une face externe du diamant ;

    – un siège de rotule en appui sur une face externe en couronne sphérique de la rotule et recevant un effort de serrage. Conjointement, les moyens de positionnement agissent indépendamment chacun sur un support de positionnement, dans chacun desquels est monté un diamant, au moyen de vis de positionnement traversant le siège de rotule parallèlement à l'axe longitudinal pour changer les positions respectives des supports.

Chaque diamant peut ainsi être positionné en agissant sur une ou plusieurs des vis en contact avec le support dudit diamant, quelle que soit la manière dont la cellule a été montée précédemment.

Dans la réalisation préférentielle de la cellule selon l'invention, des moyens de transmission de l'effort de serrage comprennent :

    – un manchon supérieur entourant et prenant appui sur le siège supérieur ;

    – un manchon inférieur entourant et prenant appui sur le siège inférieur et coulissant dans le manchon supérieur pour assurer le guidage respectif des ensembles inférieur et supérieur comportant chacun un manchon, un siège de rotule, une rotule, un support de diamant et un diamant ;

    – un écrou de cellule pour maintenir et limiter la translation des manchons supérieur et inférieur et ainsi maintenir la pression dans la chambre haute pression ; et

    – un joint torique placé entre les deux manchons et étant comprimé lorsque les deux manchons sont rapprochés, pour mettre la chambre haute pression sous la haute pression. La symétrie des montages inférieur et supérieur contribue à la facilité du positionnement respectif des deux diamants.

Pour faciliter le montage du joint métallique, ce dernier a une fente d'indexage angulaire pour recevoir un pion de positionnement angulaire.

Pour permettre l'observation et l'analyse de matériaux au moyen de rayonnements centrés sur l'axe longitudinal de la cellule, les montages sont munis d'un perçage conique et convergent vers le centre de la rotule, le cône se terminant dans la rotule par une courte portion cylindrique de diamètre inférieur à la largeur des diamants.

Dans le cas de l'utilisation de diamants taillés en poire, chacun d'eux est serti dans un siège de diamant par l'intermédiaire d'un joint de sertissage en cuivre recuit qui se déforme tout au long du sertissage pour envelopper le diamant au niveau de sa ceinture.

Un autre objet principal de l'invention est une installation d'observation et d'analyse d'échantillons de matière confinés dans une chambre de gaz à haute pression utilisant une cellule, telle que décrite précédemment et comprenant :

    – un conteneur de conditionnement de la cellule pour remplir la chambre haute pression de gaz et effectuer les observations à des pressions élevées ;

    – une presse de mise sous très haute pression de la chambre haute pression de la cellule et sur laquelle il est possible d'effectuer des observations et analyses à des pressions très élevées ;

    – un microscope d'observation mobile pouvant être placé au-dessus du conteneur de conditionnement et au-dessus de la presse ;

    – une source de lumière pour alimenter en lumière le conteneur de conditionnement ou la presse ; et

    – des moyens de contrôle, de visualisation et d'enregistrement des mesures.

Une réalisation préférentielle du conteneur de conditionnement fait qu'il est constitué de :

    – une enceinte métallique, à l'intérieur de laquelle est placée la cellule enfermée entre un obturateur optique supérieur et un obturateur optique inférieur tournant logé dans un obturateur inférieur fixe ;

    – une arrivée de gaz haute pression ;

    – de culasses inférieure et supérieure pour positionner ces éléments dans l'enceinte métallique ;

    – un volant de manoeuvre fixé à l'obturateur optique inférieur tournant pour actionner l'écrou de la cellule lorsque la pression à faire régner dans la chambre haute pression est atteinte ; et

    – une fibre optique reliée à la source de lumière, montée au milieu du volant de manoeuvre et de l'obturateur optique inférieur tournant.

## LISTE DES FIGURES

L'invention et ses différentes caractéristiques seront mieux comprises à la description suivante, faite à titre d'exemple non limitatif, et qui est accompagnée des figures représentant respectivement :

    – figure 1A, un schéma explicatif du principe de fonctionnement d'une cellule à enclumes de diamant.
– figure 1B, un grandissement partiel de la figure 1B centré sur la chambre à haute pression ;
– figure 2, un dispositif d'observation et de mesure selon l'art antérieur et utilisant une cellule à enclumes de diamant ;
– figure 3, une vue en coupe de la cellule à enclumes de diamant selon l'invention ;
– figure 4, une vue écorchée du joint métallique de la cellule à enclumes de diamant selon l'invention ;
– figure 5, un schéma représentant une installation d'analyse et d'observation utilisant une cellule à enclumes de diamant selon l'invention ;
– figure 6, une coupe du conteneur de conditionnement utilisé dans l'installation de la figure 5 ;
– figure 7, une coupe d'un montage préférentiel d'un diamant dans son support, selon l'invention.

## DESCRIPTION DETAILLEE D'UNE REALISATION DE L'INVENTION

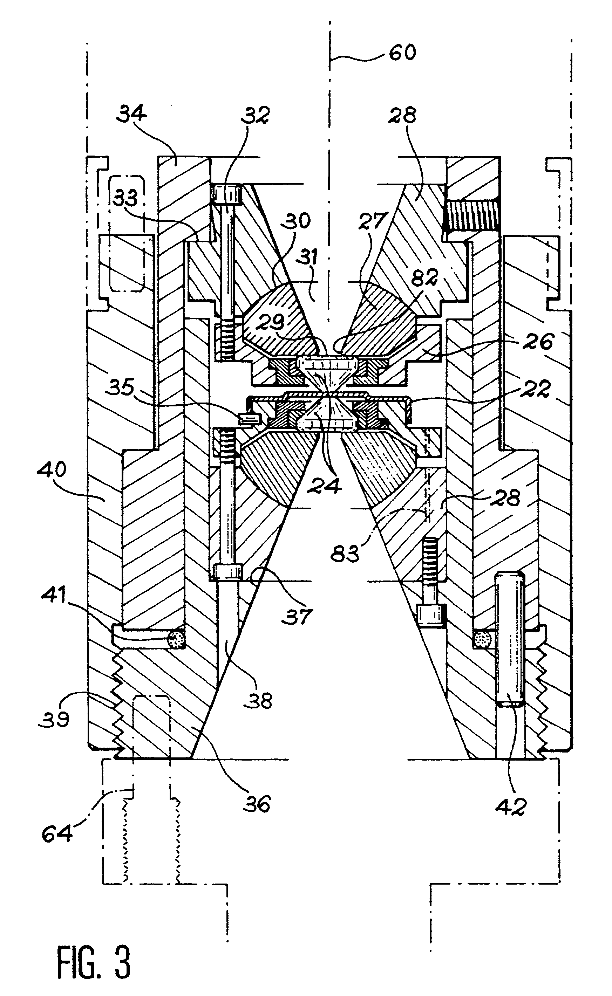

En référence à la figure 3, la cellule selon l'invention reprend le principe de fonctionnement énoncé précédemment à l'appui de la figure 1. En conséquence, on y retrouve un joint métallique 22 au centre duquel est ménagée une très fine cavité, telle que représentée sur la figure 1B. Les deux enclumes de diamant, repérées 24, sont taillées en poire, c'est-à-dire en forme pyramidale tronconique. Le sommet de chaque diamant est tronqué par une face interne constituant la paroi inférieure ou supérieure de la chambre haute pression. Chaque diamant est maintenu par sa ceinture dans un support de positionnement 26 par l'intermédiaire d'un montage préférentiel expliqué à la fin de la présente description. Le montage se complète par des moyens de positionnement des deux diamants 24, l'un par rapport à l'autre.

Comme dans l'art antérieur, on utilise également des moyens de transmission de l'effort de serrage des deux diamants 24, l'un vers l'autre, pour faire régner une pression très élevée dans la chambre haute pression.

Selon l'invention, et en se référant à la figure 3, on constate que le montage des éléments qui viennent d'être énoncés, est symétrique par rapport au plan du joint 22. En effet, les moyens de serrage comprennent, pour chaque diamant 24, un ensemble constitué d'une rotule 27 et d'un siège de rotule 28. Chaque rotule 27 a une face plane en appui sur la face externe 29 d'un diamant 24. La face externe 30 de chaque rotule 27 est une couronne sphérique dont le centre de révolution est de préférence le centre théorique des sommets des deux diamants 24 qui se trouve au centre de la chambre à haute pression. Il est question de forme en couronne sphérique car chaque rotule 27 est percée d'un passage 31 nécessaire pour effectuer les observations et analyses au moyen des différents rayonnements utilisés. Ce passage 31 se termine toutefois par une courte portion cylindrique 82, moins large que le diamant 24, destinée à conférer à la rotule 27 une résistance mécanique optimale au niveau de l'appui sur la face externe 29 du diamant 24. Chaque rotule 27 est donc complétée d'un siège de rotule 28 dont la face interne est complémentaire avec la face externe 30 de la rotule 27. Par rapport à l'ensemble de la cellule, et notamment aux pièces périphériques qui font office de corps, chaque siège de rotule 28 est fixe, alors que chaque rotule 27 peut pivoter autour du centre de la cellule grâce à sa surface externe 30 pivotant dans la surface interne d'un siège de rotule 28.

Selon l'invention, le pivotement d'une rotule 27 se fait au moyen de vis de positionnement 32, de préférence au nombre de trois. Chaque vis 32 traverse le support de rotule 28, la tête de la vis 32 restant accessible de l'extérieur. Le filetage de chaque vis 32 pénètre dans le support 26 du diamant 24. On comprend ainsi qu'à l'aide de trois vis 32, il est possible d'obtenir n'importe quelle orientation du plan sensiblement perpendiculaire à l'axe longitudinal de la cellule et portant le diamant 24 par l'intermédiaire du support 26.

De la sorte, une fois la cellule montée, il est possible de changer ou d'affiner le positionnement relatif des deux enclumes de diamant 24 au moyen des vis de positionnement 32, aussi bien sur le montage inférieur que sur le montage supérieur.

On comprend également que n'importe quel effort de serrage important peut être communiqué à chacun des sièges de rotule 28, cet effort est en effet communiqué au support de rotule 28 supérieur par un manchon supérieur 34, au moyen d'une surface d'appui radiale 33. De même, il est communiqué au support de rotule 28 inférieur par un manchon inférieur 36, au moyen de la surface d'appui radial 37. Si un des manchons 34 ou 36 recouvre la tête des vis de positionnement 32, des trous d'accès 38 peuvent être prévus en regard de chaque tête de vis 32.

Une goupille 42 de blocage en rotation des manchons supérieur 34 et inférieur 36 permet d'éviter des éventuelles rotations relatives d'un diamant par rapport à l'autre.

Des passages 83, parallèles à l'axe 60 de la cellule, pratiqués dans le manchon inférieur 36 permettent l'accès du centre de la cellule pour des conducteurs électriques reliés à d'éventuels dispositifs de mesure ou de surveillance.

L'effort de serrage à transmettre aux diamants 24 est donc obtenu par rapprochement des manchons supérieur 34 et inférieur 36. La pièce périphérique 40 qui fait office de corps a une fonction d'écrou. En effet, un taraudage de serrage interne 39 agit sur le manchon inférieur 36. Cet écrou 40 bloque ainsi en position de serrage les deux manchons supérieur 34 et inférieur 36. Un joint torique 41 est placé entre les manchons supérieur 34 et inférieur 36. Il se trouve comprimé lors du serrage des deux manchons. Lorsque l'on desserre l'écrou 40, le joint torique 41 a tendance à écarter les deux manchons supérieur 34 et inférieur 36, ce qui permet le remplissage de la cellule en gaz.

Dans la réalisation préférentielle de la cellule décrite dans les paragraphes précédents, les rotules 27 sont en carbure de tungstène ou en acier à outil rapide (Rc 64). On peut préciser que pour l'emploi de diamants 24 de largeur de 6 mm, les rotules 27 ont un rayon d'environ 11 mm, le centre du rayon se trouvant dans le plan de travail des enclumes. Les sièges de rotule 28 sont de préférence en acier du type MARAGING traité à 52 Rc. Les trois vis de positionnement 32 sont du type à six pans creux, disposées de façon équidistantes sur un diamètre de perçage de 20 mm.

La conicité des perçages des rotules 27 forme de préférence une ouverture optique réelle égale à 45° sur un diamètre de base débouchant sur la surface externe du diamant 24 égale à 2,1 mm.

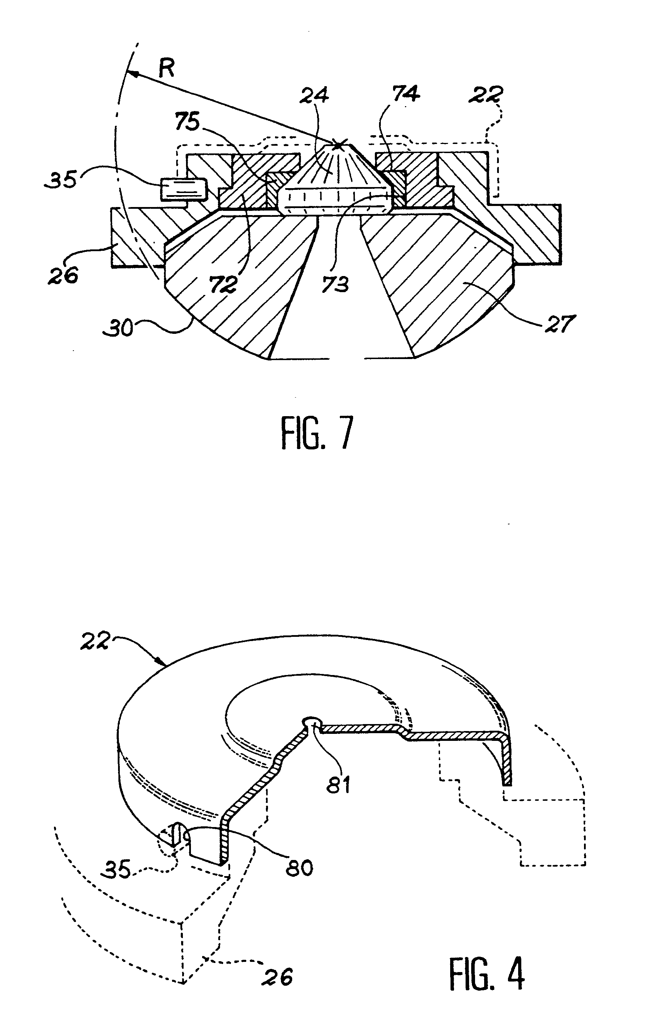

L'ensemble composé d'un diamant 24 et de ses supports dans lesquels il est monté sera détaillé plus loin. On peut toutefois signaler que le support de positionnement 26 inférieur est muni d'un pion 35 horizontal faisant saillie dudit support de positionnement 26 inférieur. Ce pion 35 a une fonction d'indexage angulaire pour le positionnement du joint métallique 22, lequel comprend une fente d'indexage 80 correspondante, représentée sur la figure 4. Cette disposition permet de replacer le joint métallique 22 toujours dans la même position. Cette figure représente de manière détaillée le joint métallique 22 de la cellule. Il est muni en son centre de la chambre haute pression 81 constituée d'un simple orifice central. Il est recourbé à sa périphérie pour permettre la présence de la fente d'indexage 80. Ce joint 22 a une épaisseur préférentielle de 2/10e de mm et est en acier AISI 301 écroui 4/4. Cette forme peut être obtenue par emboutissage, mais la chambre centrale 81 est percée après une opération consistant à relever l'empreinte des deux enclumes en diamant 24. La chambre centrale 81 a un diamètre variant de 0,10 à 0,35 mm, suivant la pression que l'on désire obtenir au moyen de la profondeur de l'empreinte. Le rôle de la compression préalable de ce joint métallique 22 est d'augmenter la tenue de ce dernier par l'effet d'écrouissage. Ses performances en sont améliorées, ce phénomène permettant de résister à des pressions supérieures par rapport au métal non écroui.

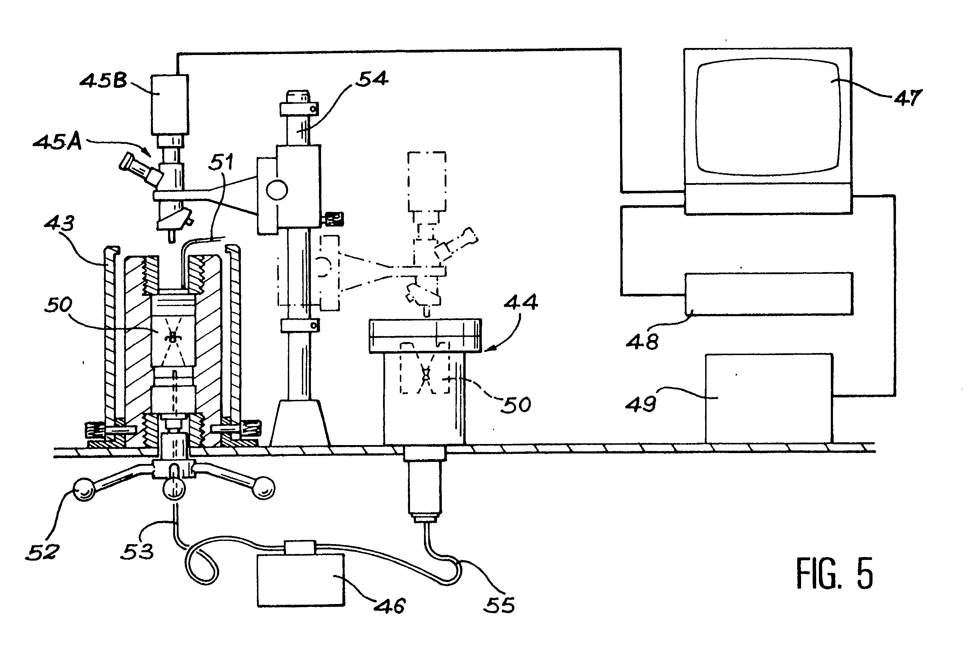

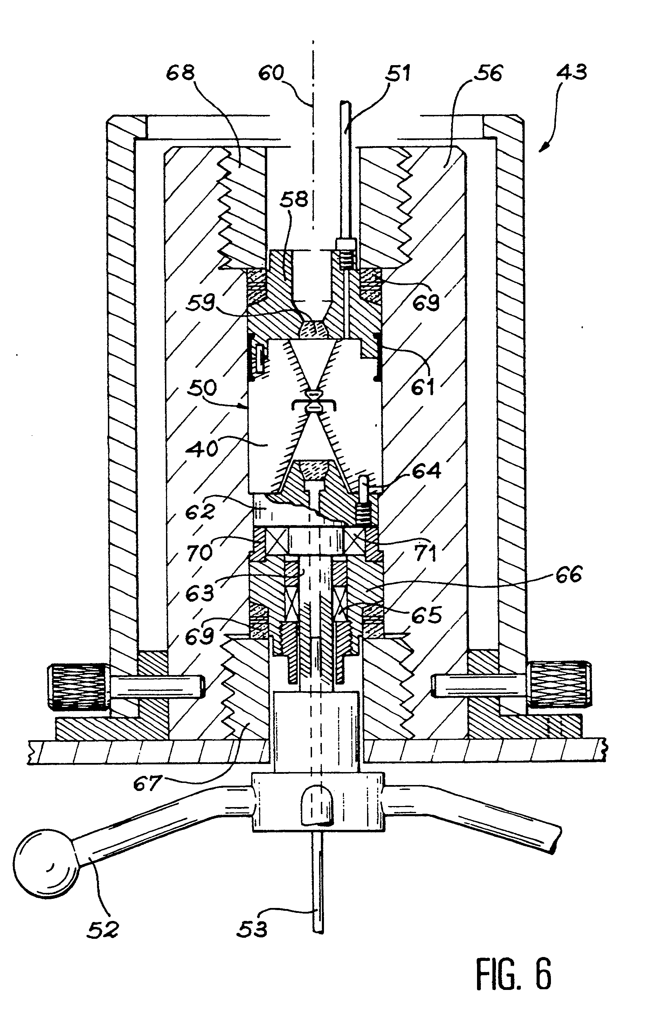

Le conditionnement de la cellule selon l'invention et son utilisation vont être maintenant décrits, en référence aux figures 5 et 6.

La figure 5 schématise une installation d'observation et d'analyse d'échantillons de matériaux utilisant une cellule, telle qu'elle vient d'être décrite. Ce type d'expérience a pour objet d'étudier le comportement des matériaux sous des très hautes pressions.

L'installation de la figure 5 a pour éléments principaux un conteneur de conditionnement 43 de la cellule 50 à l'intérieur duquel elle est placée, une presse 44 de mise sous pression de la même cellule 50, un microscope d'observation 45 symbolisant l'appareil d'observation, une source de lumière 46 symbolisant la fourniture des rayonnements nécessaires aux mesures, et des moyens de contrôle et de visualisation 47, 48 et 49.

Le conteneur de confinement 43 a pour fonction principale de mettre la chambre haute pression de la cellule 50 sous atmosphère de gaz avant les observations. A cet effet, il est relié à une source de gaz sous pression 51. Son fonctionnement sera expliqué plus loin, en regard de la figure 6. On peut toutefois constater qu'il permet, en outre, une fois que la cellule 50 est conditionnée sous gaz, d'observer directement le matériau enfermé dans la cellule 50 sous une pression qui dépend de l'arrivée de gaz sous pression 51 et du blocage de la cellule 50 dans le conteneur de conditionnement 43. Cette observation s'effectue grâce à l'apport de rayonnements lumineux, issus de la source lumineuse 46 et traversant un volant de manoeuvre 52 du conteneur 43 par une fibre optique 53.

Le microscope 45A est monté sur une colonne 54, de manière à pouvoir être positionné soit au-dessus du conteneur de conditionnement 43, soit au-dessus de la presse 44.

Cette dernière a pour fonction, une fois que la cellule 50 est conditionnée sous gaz, de communiquer à la chambre haute pression de la cellule 50 la très haute pression sous laquelle doivent s'effectuer les observations. Elle peut être hydraulique, de type classique. On signale simplement qu'elle doit comporter une fenêtre supérieure transparente aux rayonnements optiques pour permettre l'utilisation du microscope 45A. Elle doit également pouvoir recevoir les rayonnements lumineux issus d'une fibre optique 55 par sa partie inférieure car l'observation du matériau enfermé dans la cellule 50 est nécessaire pour mesurer la très haute pression que l'on désire faire régner à l'intérieur de la chambre haute pression. Comme le représente la figure 1B, dans ce type de mesure, on utilise comme capteur de pression, un matériau, tel qu'un rubis 82 placé dans la chambre haute pression, et on observe sa structure et l'évolution de sa fluorescence, au fur et à mesure que la pression monte dans la cellule.

Une fois que la pression déterminée est atteinte à l'intérieur de la chambre haute pression, la cellule 50 est verrouillée par serrage de l'écrou repéré 40 sur la figure 3. La cellule 50 peut alors être sortie de la presse 44 et être soumise à des observations. Une fois la gamme de mesure effectuée, il est possible de replacer la cellule 50 dans la presse 44, de déverrouiller l'écrou 40 et de mettre la chambre haute pression de la cellule 50 à une pression différente, afin d'effectuer une autre gamme de mesure.

Le microscope 45A est équipé d'un zoom et peut être complété d'une caméra CCD 45B. L'évolution de l'image peut être suivie sur le moniteur de télévision 47 et éventuellement enregistrée sur un magnétoscope, il faut signaler que c'est le même système d'imagerie et de mesure qui permet à la fois de contrôler et d'analyser les phénomènes lors des mises en pression de la cellule 50 au moyen de la presse hydraulique 44 et d'effectuer d'autres gammes de mesure. Le conteneur de conditionnement 43 est représenté en détail sur la figure 6. On retrouve sur cette figure la cellule selon l'invention 50 enfermée à l'intérieur de celui-ci, l'arrivée de gaz sous pression 51, le volant de manoeuvre 52 et la fibre optique 53 destinée à apporter les rayonnements nécessaires à l'analyse. La cellule 50 est positionnée selon son axe longitudinal dans le conteneur 43, au milieu d'une enceinte en acier 56 dont l'alésage interne correspond au diamètre extérieur de la cellule 50.

La mise en oeuvre préférentielle du conteneur de conditionnement prévoit que cette enceinte 56 est en acier 35 NCD 16, traité à 150 DaN/mm², parkerisé. Pour donner un ordre d'idées de la dimension du matériel utilisé, on peut signaler que cette enceinte 56 a de préférence un diamètre externe égal à 120 mm et un diamètre interne égal à 50 mm, ce dernier correspondant au diamètre externe de la cellule 50.

Cette dernière est surmontée d'un obturateur optique supérieur 58 équipé d'un hublot 59 placé sur l'axe longitudinal repéré 60 de la cellule 50 et de l'enceinte 56. Ce hublot 59 est de préférence tronconique et en saphir. Il est emmanché dans l'obturateur supérieur optique 58, de préférence en mettant en intermédiaire un cône non représenté, car son épaisseur est de l'ordre de 2/10e de mm. Ce cône est en plastique et joue alors le rôle de joint d'étanchéité. Sa qualité de glissement permet au hublot 59 un léger retrait au moment du déchargement en pression de l'enceinte 56.

L'obturateur optique supérieur 58 est relié à la cellule 50 au moyen d'un collier 61 du type à baïonnette, faisant office de verrou. Il est de préférence en cuivre bérylium, traité à une dureté de 140 DaN/mm².

De manière analogue à la partie supérieure, un obturateur optique inférieur tournant 62 comprend également un hublot 59. On utilise de préférence la même matière pour réaliser les deux obturateurs optiques supérieur 58 et inférieur 62. Cet obturateur optique inférieur tournant 62 est solidaire en rotation du volant de manoeuvre 52, au moyen d'un arbre 63. De plus, il est muni de plusieurs doigts d'entraînement 64, parallèles à l'axe longitudinal 60 de la cellule 50 et pénétrant dans l'écrou 40 de la cellule 50. Ainsi, il est possible, à l'aide du volant de manoeuvre 52, de faire tourner l'écrou 40 commandant le blocage ou le déblocage du serrage des deux manchons de la cellule 50, et par là-même, de commander le blocage ou le déblocage de la mise sous pression de la cellule 50.

La liaison mécanique du volant de manoeuvre 52 sur l'arbre 63 peut se faire par n'importe quel moyen de blocage en rotation, par exemple avec un carré d'entraînement.

L'étanchéité au niveau de ce joint optique inférieur 62 qui est tournant, est assurée d'un joint d'étanchéité à haute pression, tel que décrit dans la demande de brevet français publiée sous le numéro 2 603 682. Il s'agit en fait d'un joint d'étanchéité statique et dynamique, traversé par un arbre mobile en translation et/ou rotation dans un alésage d'un corps. Les différentes parties de ce joint tournant 65 ont été simplement symbolisées, mais n'ont pas été repérées sur cette figure 6. Ce joint tournant 65 est placé dans un obturateur optique fixe inférieur 66 dont le diamètre externe correspond au diamètre interne de l'enceinte métallique 56. Il supporte la bague extérieure d'un palier 71, à l'intérieur duquel est monté l'arbre 63.

L'ensemble, constitué par l'obturateur optique supérieur 58, la cellule 50, l'obturateur inférieur tournant 62, l'obturateur inférieur fixe 66, le joint tournant 65 et l'arbre 63, porteur du volant de manoeuvre 52, est bloqué en translation à l'intérieur de l'enceinte métallique 56 au moyen de deux culasses inférieure 67 et supérieure 68. Chacune de ces culasses 67 et 68 est vissée à l'intérieur de l'enceinte métallique 56 et a une surface radiale interne permettant le serrage de l'ensemble, de préférence par l'intermédiaire d'un joint légèrement élastique 69.

L'obturateur optique inférieur 66 peut être complété par une entretoise 70 en bronze, sur laquelle prend appui la bague extérieure du palier 71.

La mise sous gaz de la chambre haute pression de la cellule 50 se fait en utilisant le processus suivant :

– introduction de la cellule 50 dans le conteneur de conditionnement 43 au moyen du montage précédemment décrit ;

– déblocage de l'écrou 40 de la cellule 50 au moyen du levier de manoeuvre 52 ;

– mise sous pression de la cellule 50 et de la chambre haute pression au moyen de l'arrivée de gaz sous pression 51 traversant l'obturateur optique supérieur 58 ;

– stabilisation de la pression à l'intérieur de la cellule, en utilisant le contrôle optique, au moyen du microscope, du rubis se trouvant à l'intérieur de la chambre haute pression, corrélé avec la mesure nanométrique du conteneur 43 ;

– verrouillage de l'écrou 40 de la cellule 50 au moyen du volant de manoeuvre 52, lorsque la pression désirée est atteinte à l'intérieur de la chambre haute pression ; et

– déroulement d'une ou plusieurs séries de mesures, soit à l'intérieur du conteneur de conditionnement 43 à pression déterminée, fournie par l'arrivée de pression 51, soit après extraction de la cellule 50, au moyen de la presse, précédemment décrite et repérée 44, pour une ou plusieurs séries de mesures mettant en jeu de très hautes pressions.

Il est possible d'utiliser la cellule selon l'invention pour des observations et analyses de matériaux sous pression en milieu liquide ou solide. Il suffit simplement d'utiliser la presse hydraulique 44 pour la mise sous pression de la chambre haute pression et pour la série de mesure, le conteneur de conditionnement en gaz étant alors inutile.

Le positionnement des deux diamants au moyen de la cellule selon l'invention étant précis, il y a lieu de bénéficier également d'une très grande précision concernant le positionnement des diamants 24 dans leur pièce de maintien et de support, en l'occurrence le support 26.

En référence à la figure 7, il est prévu de sertir le diamant 24 d'une manière bien précise par rapport au centre du rayon R de la surface sphérique sur laquelle s'effectue le pivotement de la rotule 27.

En effet, comme représenté sur la figure 3 à l'aide de hachures très serrées, on constate que chaque diamant 24 est positionné à l'intérieur de deux pièces dont la plus large prend appui dans le support 26. Ces deux pièces sont représentées sur la figure 7. On utilise un support de sertissage 72 devant prendre appui sur le support de positionnement 26 et à l'intérieur duquel se trouve un orifice possédant un décrochement orthogonal 73 de diamètre plus large que celui de la ceinture du diamant 24. Cet orifice se termine par une surface radiale 74. Un joint de sertissage 75 est positionné au préalable dans le décrochement 73. Il a une forme torique et une section initiale triangulaire. Il est destiné à recevoir le diamant 24. La section de ce joint de sertissage 75 est équivalente à la section qui resterait libre si l'on positionnait le diamant 24 dans le support de sertissage 72 sans le joint de sertissage 75.

En effet, le sertissage consiste à positionner au préalable le diamant 24 sur le joint de sertissage 75, lui-même posé dans le décrochement orthogonal. Un effort important est communiqué au diamant 24. Le joint de sertissage 75 se déforme pour occuper l'espace torique restant libre entre le diamant 24 et le support de sertissage 72. Il entoure ainsi la ceinture du diamant 24. Un tel sertissage peut être effectué au moyen de la presse hydraulique 44 utilisée dans l'installation selon l'invention.

## APPLICATION DE L'INVENTION

La cellule et son installation peuvent être utilisées dans tous les domaines où l'on éprouve le besoin de caractériser les matériaux dans un état de confinement sévère, sur des petites quantités de matières. On peut ainsi étudier les équations d'états, les transitions de phases et leurs propriétés, le volume d'activation dans les molécules enzymatiques, la fusion des matériaux, les effets thermomécaniques, les propriétés thermodynamiques des matériaux.

## Revendications

1. Cellule d'observation et d'analyse thermodynamique d'un échantillon de matière sous haute pression du type à enclumes de diamant et à axe longitudinal (60) comprenant :

    – un joint métallique (22), fin et percé en son centre pour former les parois latérales d'une chambre à haute pression (1) ;

    – deux enclumes de diamant (24), appelées diamants, placées face à face par une face interne (6) de chaque côté du joint (22) pour fermer hermétiquement la chambre à haute pression (1) ;

    – des moyens de positionnement des deux diamants (24) l'un par rapport à l'autre ; et

    – des moyens de transmission de l'effort de serrage des deux diamants (24) l'un vers l'autre, pour faire régner une pression très élevée dans la chambre à haute pression (1),

caractérisée en ce que :

    – les moyens de serrage comprennent chacun un ensemble constitué d'une rotule (27) percée selon l'axe longitudinal (60) en appui sur une face externe (29) du diamant (24) et d'un siège de rotule (28) en appui sur une face externe (30) en couronne sphérique de la rotule (27) et recevant un effort de serrage ;

    – les moyens de positionnement agissant indépendamment sur chacun de deux supports de positionnement (26), dans chacun desquels est monté un diamant (24), au moyen de vis de positionnement (32) traversant le siège de rotule (28) parallèlement à l'axe longitudinal (60), pour changer les positions respectives des supports de positionnement (26) ;

    – les moyens de transmission de l'effort de serrage comprennent :

      . un manchon supérieur (34) entourant et prenant appui sur le siège de rotule supérieur (28) ;

      . un manchon inférieur (36) entourant et prenant appui sur le siège de rotule inférieur (28) pour assurer le guidage respectif des deux ensembles inférieur et supérieur comportant chacun un manchon (34, 36), un siège de rotule (28), une rotule (27), un support de positionnement (26), un diamant (24) ;

      . un écrou de cellule (40) pour limiter la translation des manchons supérieur (34) et inférieur (36) et ainsi maintenir la pression dans la chambre haute pression (1) ;
. un joint torique (41) placé entre les deux manchons (34, 36) et étant comprimé lorsque les deux manchons (34, 36) sont rapprochés pour mettre la chambre haute pression (1) sous haute pression.

2. Cellule selon la revendication 1, caractérisée en ce que le joint métallique (22) a une fente d'indexage angulaire (80) pour recevoir un pion de positionnement angulaire (35).

3. Cellule selon la revendication 1, caractérisée en ce que chaque rotule (27) est munie d'un perçage conique et convergent vers le centre de la rotule (27), ce cône se terminant par une courte portion cylindrique (82) de diamètre inférieur à la largeur du diamant (24).

4. Cellule selon la revendication 1, caractérisée en ce que chaque diamant (24) est serti dans un siège de sertissage (72) en cuivre recuit qui se déforme tout au long du sertissage pour envelopper le diamant (24).

5. Installation d'observation et d'analyse d'échantillons de matières confinées dans une chambre à haute pression (76) utilisant une cellule selon l'une quelconque des revendications précédentes, caractérisée en ce qu'elle comprend :
   - un conteneur de conditionnement (43) de la cellule (50) pour remplir la chambre haute pression (1) de gaz et effectuer les observations à des pressions élevées ;
   - une presse hydraulique (44) de mise sous très haute pression de la chambre haute pression (1) de la cellule (50) et sur laquelle il est possible d'effectuer des observations des analyses à des pressions très élevées ;
   - un microscope d'observation (45) mobile, pouvant être placé au-dessus du conteneur de conditionnement (43) et de la presse hydraulique (44) ;
   - une source de lumière (46) pour alimenter en lumière le conteneur de conditionnement (43) et la presse hydraulique (44) ; et
   - des moyens de contrôle, de visualisation et d'enregistrement de mesures.

6. Installation selon la revendication 5, caractérisée en ce que le conteneur de conditionnement (43) comprend :
   - une enceinte métallique (56) à l'intérieur de laquelle est placée la cellule (50) enfermée entre un obturateur optique supérieur (58) et un obturateur optique inférieur tournant (62) logé dans un obturateur inférieur fixe (66) ;

- une arrivée de gaz haute pression (51) ;
- deux culasses supérieure (68) et inférieure (67) pour positionner ces éléments dans l'enceinte métallique (56) ;
- un volant de manoeuvre (52) fixé à l'obturateur optique inférieur tournant (62) pour actionner l'écrou (40) de la cellule (50) lorsque la pression à faire régner dans la chambre haute pression (76) est atteinte ; et
- une fibre optique (53) reliée à la source de lumière (46) montée au milieu du volant de manoeuvre (52) et de l'obturateur optique inférieur tournant (62).

FIG. 1A

FIG. 1B

FIG. 2

EP 0 458 672 A1

FIG. 3

FIG. 7

FIG. 4

FIG. 5

FIG. 6

Office européen
des brevets

**RAPPORT DE RECHERCHE EUROPEENNE**

Numero de la demande

EP  91 40 1219

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | REVIEW OF SCIENTIFIC INSTRUMENTS vol. 57, no. 6, juin 1986, pages 1013-1031, New York, US; A. JAYARAMAN: "Ultrahigh pressures"<br>* document en entier *<br>--- | 1,3,4 | G 01 N   21/03<br>G 01 N   23/20 |
| A | JOURNAL OF PHYSICS E: SCIENTIFIC INSTRUMENTS vol. 22, 1989, pages 913-923, GB; D.J. DUNSTAN et al.: "The technology of diamond anvil high-pressure cells: I. Principles, design and construction"<br>* figures 5,9 *<br>--- | 4 | |
| A | JOURNAL OF PHYSICS E: SCIENTIFIC INSTRUMENTS vol. 22, 1989, pages 923-933, GB; I.L. SPAIN et al.: "The technology of diamond anvil high-pressure cells: II. Operation and use"<br>* document en entier *<br>--- | 1,5 | |
| A | REVIEW OF SCIENTIFIC INSTRUMENTS vol. 58, no. 3, mars 1987, pages 412-424, New York, US; N. DAHAN et al.: "Small diamond anvil high-pressure cell for infrared spectroscopy of gas and liquid"<br>* figure 2 *<br>--- | 5,6 | **DOMAINES TECHNIQUES RECHERCHES (Int. Cl.5)**<br><br>G 01 N<br>G 01 J |
| A | REVIEW OF SCIENTIFIC INSTRUMENTS vol. 56, no. 10, octobre 1985, pages 1903-1906, Woodbury, New York, US; H. KAWAMURA et al.: "Diamond anvil cell for cryogenic temperature with optical measurement system"<br>* figure 1 *<br>---                       -/- | 5,6 | |

Le présent rapport a été établi pour toutes les revendications

| Lieu de la recherche | Date d'achèvement de la recherche | Examinateur |
|---|---|---|
| BERLIN | 20-08-1991 | BRISON O.P. |

**Office européen des brevets**

# RAPPORT DE RECHERCHE EUROPEENNE

Numero de la demande

EP 91 40 1219

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | REVIEW OF SCIENTIFIC INSTRUMENTS vol. 60, no. 6, juin 1989, pages 1008-1014, New York, US; T. HIRAGA et al.: "Versatile setup for pressure and temperature-controlled time-resolved emission spectroscopy" * document en entier * --- | 5,6 | |
| A | US-A-4 602 377  (D. SCHIFERL et al.) * abrégé * ----- | 1 | |

**DOMAINES TECHNIQUES RECHERCHES (Int. Cl.5)**

Le présent rapport a été établi pour toutes les revendications

| Lieu de la recherche | Date d'achèvement de la recherche | Examinateur |
|---|---|---|
| BERLIN | 20-08-1991 | BRISON O.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P0403)